# EUROPÄISCHE PATENTSCHRIFT

(11) **EP 3 428 834 B1**
(45) Veröffentlichungstag und Bekanntmachung des Hinweises auf die Patenterteilung: **12.06.2019**
(21) Anmeldenummer: 17180889.2
(22) Anmeldetag: 12.07.2017
(51) Int. Cl.: G06K 7/14, G06N 3/08

(54) **OPTOELEKTRONISCHER CODELESER UND VERFAHREN ZUM LESEN VON OPTISCHEN CODES**
OPTOELECTRONIC CODE READER AND METHOD FOR READING OPTICAL CODES
LECTEUR DE CODE OPTOÉLECTRONIQUE ET PROCÉDÉ DE LECTURE DE CODE OPTIQUE

(43) Veröffentlichungstag der Anmeldung: 16.01.2019
(73) Patentinhaber: Sick AG, 79183 Waldkirch (DE)
(72) Erfinder: Schüler, Pascal, 79331 Teningen (DE)

(56) Entgegenhaltungen:
- DE-A1- 10 137 093
- US-A1- 2010 230 493
- US-A1- 2016 125 218

## Beschreibung

Die Erfindung betrifft ein Verfahren zum Lesen von optischen Codes nach dem Oberbegriff von Anspruch 1.

Codeleser sind von Supermarktkassen, zur automatischen Paketidentifikation, Sortierung von Postsendungen, von der Gepäckabfertigung in Flughäfen und aus anderen Logistikanwendungen bekannt. In einem Codescanner wird ein Lesestrahl mittels eines Drehspiegels oder eines Polygonspiegelrads quer über den Code geführt. Ein kamerabasierter Codeleser nimmt mittels eines Bildsensors Bilder der Objekte mit den darauf befindlichen Codes auf, und eine Bildauswertungssoftware extrahiert aus diesen Bildern die Codeinformation. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen.

In einer wichtigen Anwendungsgruppe werden die Code tragenden Objekte an dem Codeleser vorbei gefördert. Ein Codescanner erfasst dabei die jeweils nacheinander in seinen Lesebereich geführten Codes. Alternativ liest in einem kamerabasierten Codeleser eine Zeilenkamera die Objektbilder mit den Codeinformationen sukzessive und zeilenweise mit der Relativbewegung ein. Mit einem zweidimensionalen Bildsensor werden regelmäßig Bilddaten aufgenommen, die sich je nach Aufnahmefrequenz und Fördergeschwindigkeit mehr oder weniger überlappen. Damit die Objekte in beliebiger Orientierung auf dem Förderer angeordnet werden können, sind oft mehrere Codeleser an einem Lesetunnel vorgesehen, um Objekte von mehreren oder allen Seiten aufzunehmen.

Für einen Codeleser oder einen Lesetunnel stellt eine hohe Leserate eines der wichtigsten Qualitätskriterien dar. Lesefehler zwingen zu aufwändigen Fehlerbehebungen, wie dem erneuten manuellen Abscannen oder einer Nachsortierung. Herkömmliche Decoder für Barcodes arbeiten auf sogenannten Kantenpositionsfeldern, die über Binarisierungstechniken aus Grauwertprofilen generiert werden. Die Bestimmung von Kantenpositionen und Binarisierungsverfahren sind eng verwandt, denn eine Kantenbestimmung entspricht einer binären Klassifikation, ob jeweils eine Kante vorhanden ist oder nicht. Die eigentliche Dekodierung erfolgt dann auf Basis der Spezifikation des jeweiligen Barcode-Typs im Wesentlichen auf einem 1-Bit Vektor anhand der Verhältnisse von Balken zu Lücken entsprechend der Kantenpositionsabfolge.

Das ist ein kritischer Punkt in der Bildverarbeitungskette, da die Gewinnung von Schwarzweißbildern beziehungsweise die Binarisierung aus den ursprünglich erfassten Grauwertesignalen mit einem signifikanten Informationsverlust von beispielsweise acht Bit des Grauwerts auf nur noch ein Bit pro Pixel verbunden ist. Denn die Erzeugung der Kantenpositionen ist immer fehlerbehaftet. Einige beispielhafte Fehlerquellen sind geringe Balkenbreite, bezogen auf die Pixelauflösung, stark verrauschte oder unscharfe Signale, mangelnder Kontrast und Druckfehler. Dadurch werden manche Kanten nicht gefunden oder ungenau positioniert, mit dem Ergebnis, dass je nach Ausmaß derartiger Fehler Codes nicht mehr gelesen werden können (NoRead). Auch wenn das Beispiel sich auf Barcodes bezieht, ergeben sich für zweidimensionale Codes ähnliche Problemstellungen.

Die EP 1 096 416 B1 offenbart ein Verfahren, mit dem ein Barcode aus mehreren aufeinanderfolgenden Scans rekonstruiert werden kann. Dazu werden Grauwertprofile, die nur einen Teil des Codes abdecken, zu einem Gesamtprofil zusammengefügt und dieses dann decodiert. Somit betrifft dies einen Vorverarbeitungsschritt, denn anschließend stellt sich wie bisher das Problem, das Gesamtprofil zu decodieren.

Aus der EP 3 009 984 A1 ist ein Detektionssystem für optische Codes bekannt, in dem während einer Förderbewegung von Objekten mit den Codes eine Sequenz von Bildern aufgenommen wird. Dann wird der Verschiebungsvektor zwischen zwei aufeinanderfolgenden Bildern bestimmt, um Bildbereiche über mehrere Aufnahmen hinweg verfolgen zu können. Die Decodierung selbst wird dadurch nicht verändert.

Es wurde bereits vorgeschlagen, neuronale Netze für das Lesen von Barcodes einzusetzen. So befasst sich die US 8 905 314 B2 mit Barcodeerkennung durch einen Klassifikator, der als lernendes neuronales Netz ausgestaltet sein kann. Allerdings arbeitet dieser Klassifikator mit Merkmalsvektoren, welche die Kantenpositionen enthalten. Damit haben die Eingangsdaten des Klassifikators den zuvor erläuterten Informationsverlust durch die Binarisierung oder Kantendetektion bereits erlitten. Der Klassifikator wird weiterhin anhand von simulierten Merkmalsvektoren trainiert. Damit fehlt die Verbindung zu den echten Daten. Herkömmliche Decoder haben außerdem auch ohne maschinelles Lernen schon eine hohe Leistungsfähigkeit erreicht. Solche bekannten Ansätze wie in US 8 905 314 B2 schöpfen daher das Potential für eine echte Verbesserung der Leserate durch maschinelles Lernen nicht aus.

Die DE 101 37 093 A1 offenbart ein Verfahren zum Erkennen eines Codes, bei dem der Code innerhalb einer Bildumgebung lokalisiert oder identifiziert wird. Dieser Schritt wird mittels eines neuronalen Netzwerks durchgeführt. Anspruch 1 ist gegen diesen Stand der Technik abgegrenzt.

Aus der US 2016/0125218 A1 ist ein Verfahren zum Lesen von hochgradig verzerrten Codes bekannt. Dazu werden Vektoren gemessener Lichtintensitäten in eine andere Repräsentation transformiert und dort mittels eines trainierten Klassifikators klassifiziert.

Die US 2010/0230493 A1 beschreibt ein Verfahren zum Erfassen von Barcodes mit wiederholten Leseversuchen bei jeweils anderer Bildverarbeitung. Dabei wird die Abfolge der eingesetzten Bildverarbeitungen mit dem Ziel eines möglichst effizienten und fehlerfreien Erfassens angepasst.

Es ist daher Aufgabe der Erfindung, das Codelesen mit maschinellem Lernen zu verbessern.

Diese Aufgabe wird durch ein Verfahren zum Lesen von optischen Codes nach Anspruch 1 gelöst. Es werden Bilddaten vorzugsweise mit Grauwerten erfasst. Zur Auswertung ordnet ein Klassifikator, der für maschinelles Lernen ausgebildet ist, Codebereichen der Bilddaten eine Codeinformation zu. Die Codebereiche werden vorzugsweise durch eine Vorverarbeitung gefunden, welche die Bilddaten beispielsweise anhand des Kontrasts segmentiert.

Die Erfindung geht nun von dem Grundgedanken aus, einen klassischen Decoder beziehungsweise dessen Decodierergebnisse für den Klassifikator zu nutzen. Der Klassifikator ist anhand von gelesenen Codes des klassischen Decoders mittels überwachtem Lernen (supervised learning) trainiert. Ein klassischer Decoder soll in diesem Zusammenhang bedeuten, dass dieser im Gegensatz zu dem trainierbaren Klassifikator mit Verfahren ohne maschinelles Lernen arbeitet. Klassisch soll hier demnach der Gegenbegriff zu maschinellem Lernen sein. Dabei sind das Setzen und die Anpassung von Parametern auch in einem klassischen Decoder möglich, das allein ist noch kein maschinelles Lernen. Wichtige praktische Unterschiede sind, dass der klassische Decoder schon mit seiner Programmierung für seine Aufgabe vorbereitet ist und nicht erst der Erfahrung beziehungsweise des Trainings bedarf, und dass seine Leistungsfähigkeit von Anfang an bis über die gesamte Laufzeit mehr oder weniger konstant ist. Die Leistung des Klassifikators hingegen hängt bei Weitem nicht nur von seiner programmierten Struktur ab, sondern ergibt sich erst im Zusammenhang mit dem Training und der Güte der Trainingsdaten.

Die Erfindung hat den Vorteil, dass die Leserate gegenüber dem klassischen Decoder und bekannten Klassifikatoren mit maschinellem Lernen zum Lesen von Codes verbessert wird. Das funktioniert auch bei störenden Einflüssen, wie geringer Auflösung, unscharfen Codes, Defekten und Rauschen. Der Klassifikator ist in der Lage, sich an spezielle Lesesituationen und anwendungsspezifische Eigenheiten von Codes anzupassen, wie geteilte Balken (split bars), Kontrastproblemen durch Über- oder Unterdruck, verwaschenen Codes und dergleichen. Diese Anpassung ist im ursprünglichen Training und sogar noch online während des Lesebetriebs möglich. Da sozusagen der klassische Decoder für das Labeling der Trainingsdaten zuständig ist, können erforderliche Trainingsdaten hoher Qualität für ein initiales Training oder eine Anpassung auf sehr einfache Weise erzeugt werden.

Ein Codeleser ist bevorzugt als Codescanner ausgebildet und weist einen Lichtsender mit einer Sendeoptik zum Aussenden eines Lesestrahls sowie eine bewegliche Ablenkeinheit auf, um den Lesestrahl periodisch in dem Erfassungsbereich abzulenken. Aus dieser Abtastung resultiert ein Remissionswert für den jeweiligen Scanwinkel, so dass auch ein Codescanner zeilenweise Bilddaten erfasst. Alternativ ist der Codeleser kamerabasiert. In zahlreichen wichtigen Anwendungen befinden sich Codeleser und Erfassungsbereich in Relativbewegung, etwa wenn ein Handgerät über den Erfassungsbereich geschwenkt wird oder wenn der Codeleser an einem Förderband installiert wird, um Codes auf darauf geförderten Objekten zu lesen. Derartige Relativbewegungen sorgen dafür, dass ein Objekt und ein Codebereich sukzessive zeilenweise erfasst wird, so dass nicht nur Bildzeilen, sondern zweidimensionale Bilder entstehen. Das gilt für Codescanner und eine Zeilenkamera in einem kamerabasierten Codeleser gleichermaßen. Es sind aber auch zweidimensionale Bildsensoren denkbar, die unmittelbar einen größeren Bildabschnitt aufnehmen. Für das Lesen eines Barcodes werden Linien durch die Bilddaten gezogen, die der Scanrichtung beziehungsweise der Kamerazeile entsprechen können, aber nicht müssen. Längs dieser Linien liefern die Bilddaten ein Grauwertprofil, das decodiert werden soll.

Der klassische Decoder ist bevorzugt dafür ausgebildet, Schwarz-Weiß-Bildinformationen zu verarbeiten. Es ist demnach eine Vorverarbeitung vorgesehen, die auch Teil des klassischen Decoders sein könnte, um entsprechende Schwarz-Weiß-Informationen aus den Grauwertprofilen zu gewinnen. Derartige klassische Decoder sind verfügbar und erreichen auch trotz der eingangs erläuterten Probleme schon eine sehr hohe Leserate.

Der klassische Decoder ist bevorzugt dafür ausgebildet, die Bilddaten zu binarisieren und/oder Kantenpositionen in den Bilddaten zu bestimmen. Somit wird, wie einleitend erläutert, aus den Grauwertprofilen effektiv ein 1-Bit-Vektor, und aus der derart verfügbaren Abfolge von Balken und Lücken ermittelt der klassische Decoder den Codeinhalt.

Der Klassifikator ordnet Codebereichen eine Codeinformation aufgrund von Grauwertinformationen der Bilddaten zu. Der Klassifikator ist demnach ein Grauwertdecoder, der anders als in bevorzugter Ausführungsform der klassische Decoder nicht mit 1-wertigen Binärdaten arbeitet, sondern mit dem Grauwertprofil. Dabei ist eine Reduzierung der Bittiefe der Graustufen denkbar, wobei aber auch ein Informationsverlust entsteht. Der Klassifikator wird folglich auch mit Grauwertprofilen trainiert, nicht mit den binarisierten Daten oder Kantenpositionen für den klassischen Decoder, der nur das Codeergebnis oder Labeling liefert. Damit nutzt der Klassifikator letztlich mehr Informationen, nämlich die Grauwertinformationen, als der klassische Decoder, der die Trainingsdaten bewertet. Das ist ein Grund für die erfindungsgemäß erhöhte Leserate: Der Klassifikator nutzt die volle Eingangsinformation der Grauwertprofile bis zur Decodierung des Codes oder der Einzelzeichen, so dass die bekannten Probleme mit Binarisierung oder Kantenpositionsbestimmung gar nicht mehr zum Tragen kommen.

Der Klassifikator weist bevorzugt ein neuronales Netz oder eine Support Vector Machine auf. Diese sind bewährte Beispiele für maschinelles Lernen, wofür zahlreiche geeignete Algorithmen und Architekturen verfügbar sind. Andere Verfahren des maschinellen Lernens wie Random Forest Trees wären aber auch denkbar.

Der Klassifikator bestimmt vorzugsweise auch ein Verlässlichkeitsmaß der jeweiligen Zuordnung eines Codebereichs zu einer Codeinformation. Bisher wurde nur das Scheitern beim Lesen eines Codes als Lesefehler betrachtet (NoRead). Daneben gibt es aber auch die Möglichkeit, dass mindestens ein Zeichen mit einem falschen Wert gelesen wurde (Misread). In gewissem Rahmen können solche Fehler durch Korrekturverfahren und Checksummen aufgedeckt oder sogar behoben werden, und diese Methoden stehen auch einem Codeleser mit einem Klassifikator zur Verfügung, der auf maschinellem Lernen basiert. Es ist aber nützlich, wenn schon der Klassifikator die Misread-Wahrscheinlichkeit bewertet. Sie wird dann beispielsweise über einen Schwellwert sogar parametrierbar, indem die geforderte Wahrscheinlichkeit für einen Misread vorgegeben und mit dem Verlässlichkeitsmaß verglichen wird.

Bevorzugt werden Codebereiche in einzelne Codeelemente unterteilt, wobei der Klassifikator jeweils in einem Schritt nur ein Codeelement decodiert. Die Klassifikation ist üblicherweise nicht zeitkritisch, ansonsten wäre es auch möglich, mehrere Instanzen des Klassifikators parallel Codeelemente decodieren zu lassen. Prinzipiell könnte ein Klassifikator auch längere Sequenzen einlernen und dann unterscheiden, müsste dazu aber wesentlich mehr Klassen trennen und deutlich aufwändiger trainiert werden. Daher ist es vorteilhaft, die Klassifikation stückchenweise für jeweils nur ein Codeelement vorzunehmen.

Bevorzugt wird ein Startzeichen und/oder ein Stoppzeichen mittels eines Verfahrens des klassischen Decoders und/oder des Klassifikators aufgefunden und der dazwischen liegende Codebereich in die einzelnen Codeelemente unterteilt. Die einzelnen Codeelemente haben in den üblichen Standards eine gleiche Länge, so dass in Kenntnis von Codeanfang und Codeende der Bereich dazwischen auf die ebenfalls je nach Codetyp bekannte Anzahl von Codeelementen verteilt werden kann. Das Auffinden der Start- und Stoppzeichen ist sowohl durch den klassischen Decoder als auch durch den Klassifikator denkbar, der dazu vorzugsweise von beiden Enden des Grauswertprofils her zur Mitte hin sucht.

Der klassische Decoder ist bevorzugt mit dem Klassifikator in einer Auswertungseinheit implementiert. Alternativ ist denkbar, die Leseergebnisse des klassischen Decoders mit einem anderen Gerät oder extern aufgrund der Bilddaten zu gewinnen. Für den Betrieb des Codelesers genügt nach der Lernphase der trainierte Klassifikator. Dennoch ist es aus verschiedenen Gründen nützlich, wenn der klassische Decoder im selben Gerät zusätzlich zu dem Klassifikator zur Verfügung steht.

Bevorzugt wird ein Code durch Zuordnung von Bilddaten eines Codebereichs zu einer Codeinformation mit dem klassischen Decoder und dem Klassifikator gelesen. Es wird also versucht, den Code auf beiden Wegen zu lesen, sei es parallel oder nacheinander. Wenn nur ein Verfahren den Code lesen kann, so wird dieses Ergebnis verwendet. Gibt es divergierende Leseergebnisse, so kann beispielsweise anhand des Verlässlichkeitsmaßes entschieden werden, ob der Klassifikator tatsächlich den klassischen Decoder überstimmt. Denkbar ist auch, für solche Fälle von Anfang an festzulegen, wer sich durchsetzt. Gelingt beiden Verfahren nur eine partielle Decodierung, so können Teilergebnisse zusammengefügt werden.

Der Klassifikator wird vorzugsweise nur zum Lesen von Codes genutzt, die mit dem klassischen Decoder nicht gelesen werden konnten. Mit dem klassischen Decoder lassen sich bereits Leseraten um 99 % erreichen. Indem der Klassifikator nur für die verbleibenden Fälle einspringt, wird die bereits erreichte Decoderqualität nicht gefährdet, sie kann im Gegenteil nur besser werden, weil der Klassifikator bisher nicht lesbare Codes möglicherweise noch entziffert. Auch wenn eine Fehlerquote von 1 % gering erscheint, besteht großes wirtschaftliches Interesse, diese weiter abzusenken. Die zahlreichen Lesevorgänge, in denen der Code bereits von dem klassischen Decoder gelesen wird, können im Übrigen zum Verifizieren oder Nachtrainieren des Klassifikators genutzt werden. Dadurch erfolgt insbesondere eine Anpassung an langsame Driften, welche die Qualität oder sonstige Eigenschaften der Codes oder der Bildaufnahme im Laufe des Betriebs verändern.

Die Zuordnung von Codebereichen zu Codeinformationen wird bevorzugt für verschiedene Linien durch die Bilddaten wiederholt, und anschließend werden Teilergebnisse zu einem gemeinsamen Codeinhalt zusammengesetzt, insbesondere in einem Voting-Verfahren. Zwar ist die Information in einem Barcode nur eindimensional codiert, er besitzt aber auch eine Ausdehnung quer dazu, so dass verschiedene Leselinien platziert und dadurch mehrere Grauwertprofile gewonnen werden können. Je nach Bildfehlern und Bildvariationen erlauben solche Grauwertprofile unter Umständen das Decodieren unterschiedlicher Teilbereiche. Das Verlässlichkeitsmaß ist besonders nützlich als Gewichtung der Votes oder einzelnen Teilbeiträge aus einer jeweiligen Lesung, um unzuverlässige und daher möglicherweise falsche Teilergebnisse gar nicht erst zu berücksichtigen.

Bevorzugt werden für ein bildübergreifendes Codelesen Codebereiche zwischen zu verschiedenen Zeitpunkten erzeugten Bilddaten verfolgt, für die somit mehrfach aufgenommenen Codebereiche jeweils Codeelementen eine Codeinformation zugeordnet und anschließend die Codeinformationen zu dem Codeinhalt zusammengesetzt. In manchen Fällen genügt es nicht, mehrere Grauwertprofile aus demselben Bild auszuwerten, beispielsweise weil sich ein Bildfehler über die gesamte Höhe erstreckt. Bei zweidimensionalen Codes ergibt sich ohnehin schon bei Bildfehlern ein Problem, die sich nur lokal und nicht über die gesamte Breite oder Höhe erstrecken. In vielen Anwendungen, etwa einem Lesetunnel, wird derselbe Codebereich mehrfach im Verlauf einer Relativbewegung erfasst. Dann können Codebereiche anhand der Relativbewegung verfolgt werden (Tracking), und aus partiellen Decodierungen in einzelnen Aufnahmen wird der gesamte Code bildübergreifend zusammengesetzt. Auch hierfür ist ein Voting-Verfahren entsprechend der partiellen Decodierung über mehrere Leselinien im selben Bild denkbar. Das Zusammensetzen von mehreren Teillesungen im selben Bild und bildübergreifend lässt sich auch kombinieren.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische dreidimensionale Übersichtsdarstellung der beispielhaften Montage eines Codelesers über einem Förderband, auf dem Objekte mit zu lesenden Codes gefördert werden;
- Fig. 2: ein Beispiel von Bilddaten eines Codes mit mehreren Scanlinien, längs derer Grauwertprofile zum Decodieren des Codes gewonnen werden;
- Fig. 3: ein beispielhaftes Grauwertprofil;
- Fig. 4: eine Darstellung eines beispielhaften Barcodes zur Erläuterung von Codeelementen oder Einzelzeichen;
- Fig. 5: eine tabellarische Darstellung mehrerer Grauwertprofile und entsprechender Codeinhalte zur Illustration von Training und Betrieb eines Klassifikators mit maschinellem Lernen;
- Fig. 6: eine tabellarische Darstellung von mehreren Decodierversuchen und deren gemeinsame Auswertung durch ein Voting-Verfahren;
- Fig. 7: eine tabellarische Darstellung von mehreren Decodierversuchen ähnlich Figur 6, jedoch über mehrere Bilder anstelle von mehreren Leseversuchen im selben Bild; und
- Fig. 8: ein Beispiel mit zwei Bildern desselben Codes, in denen sich Bildfehler aufgrund unterschiedlicher Aufnahmesituationen verändern.

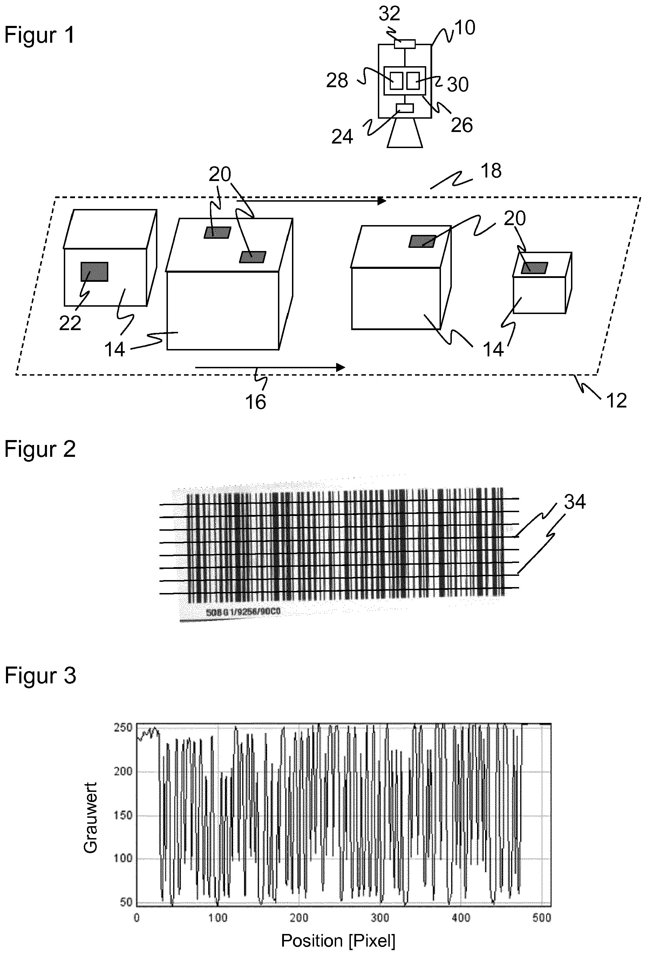

Figur 1 zeigt einen optoelektronischen Codeleser 10, der über einem Förderband 12 montiert ist, welches Objekte 14, wie durch den Pfeil 16 angedeutet, durch den Erfassungsbereich 18 des Codelesers 10 fördert. Die Objekte 14 tragen an ihren Außenflächen Codebereiche 20, die von dem Codeleser 10 erfasst und ausgewertet werden. Diese Codebereiche 20 können von dem Codeleser 10 nur dann erkannt werden, wenn sie auf der Oberseite oder zumindest von oben sichtbar angebracht sind. Daher kann abweichend von der Darstellung in Figur 1 zum Lesen eines etwa seitlich oder unten angebrachten Codes 22 eine Mehrzahl von Codelesern 10 aus verschiedenen Richtungen montiert sein, um eine sogenannte Omnilesung aus allen Richtungen zu ermöglichen. Die Anordnung der mehreren Codeleser 10 zu einem Lesesystem erfolgt in der Praxis meist als Lesetunnel. Diese stationäre Anwendung des Codelesers 10 an einem Förderband ist in der Praxis sehr häufig. Die Erfindung bezieht sich aber zunächst auf den Codeleser 10 selbst und dessen Decodierverfahren, so dass dieses Beispiel nicht einschränkend verstanden werden darf.

Der Codeleser 10 erfasst mit einem Lichtempfänger 24 Bilddaten der geförderten Objekte 14 und der Codebereiche 20, die von einer Auswertungseinheit 26 mittels Bildauswertung und Decodierverfahren weiterverarbeitet werden. Es kommt für die Erfindung nicht auf das konkrete Bildgebungsverfahren an, so dass der Codeleser 10 nach irgendeinem an sich bekannten Prinzip aufgebaut sein kann. Beispielsweise wird jeweils nur eine Zeile erfasst, sei es mittels zeilenförmigem Bildsensor oder einem Scanverfahren, und die Auswertungseinheit fügt die im Laufe der Förderbewegung erfassten Zeilen zu den Bilddaten zusammen. Mit einem matrixförmigen Bildsensor lässt sich schon in einer Aufnahme ein größerer Bereich erfassen, wobei auch hier das Zusammenfügen von Aufnahmen sowohl in Förderrichtung als auch quer dazu möglich ist.

Hauptaufgabe des Codelesers 10 ist, die Codebereiche 20 zu erkennen und die dort angebrachten Codes auszulesen. Dazu sind in der Auswertungseinheit 26 ein klassischer Decoder 28 und ein nach Prinzipien des maschinellen Lernens arbeitender Klassifikator 30 implementiert. Das Decodierverfahren wird weiter unten anhand der Figuren 2 bis 8 im Detail erläutert. Der klassische Decoder 28 dient in erster Linie dazu, den Klassifikator 30 zu trainieren, so dass in einigen Ausführungsformen abweichend von Figur 1 kein klassischer Decoder 28 in dem Codeleser 10 vorhanden ist. In bevorzugten Ausführungsformen findet der klassische Decoder 28 aber auch im Betrieb Verwendung, um Codes zu lesen, das Training, insbesondere Nachtrainieren, oder eine Validierung zu vereinfachen oder zumindest Teilaufgaben wie das Segmentieren in Codeelemente zu leisten. Über eine Schnittstelle 32 gibt der Codeleser 10 Informationen aus, wie gelesene Codes oder Bilddaten. Die Funktionalität des klassischen Decoders 28 und/oder des Klassifikators kann auch unter Ausnutzen der Schnittstelle 32 zumindest teilweise extern vorgesehen sein, etwa durch Anschluss an ein Netzwerk oder eine Cloud. Beispielsweise wird so das aufwändige Training extern vorgenommen. Der Klassifikator 30 empfängt dann nur das Lernergebnis, etwa die Gewichtungsfaktoren eines neuronalen Netzes, und kann dann zum Codelesen eingesetzt werden.

Figur 2 zeigt ein Beispiel von mit dem Codeleser 10 erfassten Bilddaten eines Codebereichs 20. Für die Decodierung eines Barcodes genügt bereits eine Bildzeile, sofern sie nicht ausgerechnet parallel zu den Codeelementen liegt. Deshalb stehen bei geeigneter Orientierung zahlreiche Leselinien 34 zur Verfügung. Eine vorausgehende Segmentierung, um den Codebereich 20 in den Bilddaten zu lokalisieren sowie das Auffinden einer geeigneten Orientierung der Leselinien 34 sind an sich bekannt und wird hier vorausgesetzt.

Vorerst bleibt die Betrachtung auf eine dieser Leselinien 34 beschränkt. Figur 3 zeigt ein entsprechendes Grauwertprofil, d.h. den Intensitätsverlauf beziehungsweise die Bildzeile längs der Leselinie 34. Decodieren heißt, diesem Grauwertprofil den Codeinhalt entsprechend der Spezifikation des Codetyps zuzuordnen. Dabei gibt es Codetypen, in denen die gelesene Codeinformation direkt einem Zeichen entspricht, wie etwa bei Interleaved 2/5. In anderen Fällen wie dem Code 128 ist die Codeinformation noch abhängig vom Zustand eines internen Decoder-Modus (CodeC-Tabelle, Modiwechsel wie Shift, Funktionszeichen FNC) und nur in einem Raw-Format erfasst, das anschließend noch konvertiert werden muss. Zwischen diesen Fällen wird anschließend nicht mehr unterschieden, sondern vereinfachend davon ausgegangen, dass die zugeordnete Codeinformation bereits das gewünschte Ergebnis ist.

Der Klassifikator 30 soll dazu dienen, die Leserate im Vergleich zu dem klassischen Decoder 28 zu erhöhen. Dazu wird der Klassifikator 30 zunächst trainiert. Das Training ist als Online-Training während des Lesebetriebs mit dem klassischen Decoder 28 denkbar, insbesondere in Form eines Nachtrainings zur weiteren Anpassung. Mit dem trainierten Klassifikator 30 ist dann ein verbessertes Decodieren möglich.

Im Folgenden wird zunächst die Lern- oder Trainingsphase und anschließend die Betriebs- oder Auswertephase an einem bevorzugten Ausführungsbeispiel beschrieben. Die Erfindung lässt zahlreiche Variationen zu, die durch Merkmale der Unteransprüche gekennzeichneten bevorzugten Ausführungsformen.

In der Lernphase wird der klassische Decoder 28 als Supervisor beziehungsweise Trainer des Klassifikators 30 eingesetzt. Dazu werden aus Bilddaten, die der Codeleser 10 oder ein vergleichbares Gerät erfasst haben, zahlreiche Grauwertprofile als Trainingsdaten erzeugt. Der klassische Decoder 28 ist in der weit überwiegenden Zahl der Fälle in der Lage, die entsprechenden Codes zu lesen, so dass die Bedeutung der Grauwertprofile bekannt ist. Grauwertprofile mit einer Fehllesung (NoRead) des klassischen Decoders 28 werden bevorzugt in dieser Lernphase verworfen. Die Trainingsdaten können neben dem üblichen Betrieb des Codelesers 10 entstehen und auch direkt online zum sukzessiven Training verwendet werden. Denkbar ist aber auch das Sammeln von Trainingsdaten in einer Datenbank und eine vom Betrieb unabhängige Lernphase, wobei wahlweise der klassische Decoder 28 sein Leseergebnis mit in der Datenbank abspeichert oder erst während des Trainings erzeugt. Prinzipiell könnte dieses Labeling von Trainingsdaten, d.h. die Zuordnung des richtigen Codeinhalts zu einem Grauwertprofil, auch auf jede andere Weise erfolgen, aber mit dem klassischen Decoder 28 steht bereits eine einfache und zuverlässige Möglichkeit zur Verfügung, die sich die Erfindung bevorzugt zunutze macht.

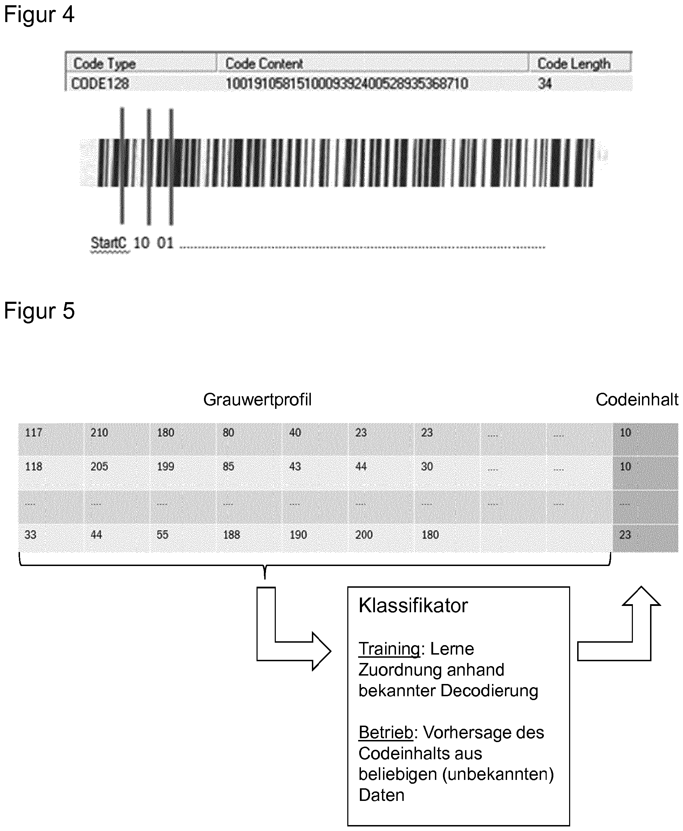

Im Rahmen der Decodierung durch den klassischen Decoder 28 wird ganz herkömmlich ein Kantenpositionsfeld erzeugt und dieses zeichenweise abgearbeitet, bis ein vollständiges Leseergebnis vorliegt. Aufgrund des Codeinhalts, des Kantenpositionsfeldes und des Codetyps ist bekannt, wo sich die einzelnen Codeelemente befinden. Figur 4 illustriert dies an einem Beispielcode, in dem anfangs einige Trennstriche für einzelne Codeelemente eingezeichnet sind. Darunter steht das decodierte Zeichen des jeweiligen Codeleements. Daraus lassen sich dann auch Segmente des Grauwertprofils gewinnen, die dem jeweiligen Zeichen entsprechen.

Jeder gelesene Code liefert daher eine Anzahl von Trainingsdatensätzen entsprechend der Codelänge, wobei jeder Trainingsdatensatz ein Segment eines Grauwertprofils samt dessen richtiger Klassifizierung enthält, nämlich der Bedeutung oder dem Codeinhalt. In der Praxis sollte das Segment des Grauwertprofils vor dem Einlernen noch bezüglich Größe und Kontrast normalisiert werden, um später in der Auswertungsphase unabhängig von Anwendungsparametern wie variierenden Balkenbreiten, Leseabständen, Objekthöhen, Kontrastschwankungen und ähnlichen Effekten zu sein.

Figur 5 zeigt noch einmal einen tabellarischen Überblick. Im linken Teil der Tabelle befindet sich in den Zeilen jeweils ein Segment eines Grauwertprofils, während rechts der zugehörige Codeinhalt steht. In der Lernphase wird diese Beziehung in dem Klassifikator 30 trainiert. Die Segmente der Grauwertprofile sind der Input (Features), der Codeinhalt liefert die assoziierten und bekannten Label beziehungsweise Klassen (target varibale).

Dabei kommen verschiedene Algorithmen beziehungsweise Implementierungen eines Klassifikators 30 für mehrere Klassen (multi-class) mit maschinellem Lernen (machine learning) in Betracht, etwa neuronale Netze, Multi-class Support Vector Machines, Random Forest Trees und andere. Auswahlkriterien sind neben dem Implementierungsaufwand und der erforderlichen Hardware vor allem die Qualität, also die tatsächliche Verbesserung der Leserate, und auch die Auswertegeschwindigkeit. Prinzipiell wäre auch ein Korrelator vorstellbar, der kein maschinelles Lernen nutzt und unmittelbar neu gelesene Segmente eines Grauwertprofils mit abgespeicherten Segmenten bekannten Inhalts korreliert. Über den Korrelationskoeffizienten würde auch ein Confidence-Level für die Korrektheit des dekodierten Zeichens geliefert. Ein solcher Brute-Force Algorithmus erfordert aber sehr viel Rechenaufwand und wird schon aus Gründen der langen Laufzeit unterlegen sein. Außerdem fehlte diesem Korrelator die Anpassungsfähigkeit an neue und unbekannte Situationen des maschinellen Lernens.

An die Trainingsphase mit ausreichend Einzelzeichen-Ergebnissen vorzugsweise für jedes Zeichen des Zeichensatzes eines zu lesenden Barcodetyps schließt sich dann die Auswertephase an, also ein Lesebetrieb, in dem der Klassifikator 30 tatsächlich zum Decodieren und zur Erhöhung der Leserate eingesetzt ist. Wird der Klassifikator 30 vortrainiert, so entfällt die Lernphase. Das kommt zum Beispiel in Betracht, wenn ein bereits trainierter Klassifikator 30 von einem Gerät direkt oder mittels Netzwerk/Cloud auf ein anderes übertragen wird.

Die Darstellung der Figur 5 passt auch auf diese Situation der Auswertungsphase. Der Unterschied ist, dass die links in der Tabelle gezeigten Grauwertprofile nun neue, unklassifizierte Daten sind. Der rechts gezeigte Codeinhalt ist folglich im Gegensatz zum Training nicht mehr bekannt, sondern wird von dem Klassifikator 30 geschätzt beziehungsweise vorhergesagt. Die Beziehungen der Trainingsdaten sind nun in dem Modell des Klassifikators 30 abgebildet, beispielsweise in Form von Gewichtungsfaktoren eines neuronalen Netzes.

Der klassische Decoder 28 wird in der Auswertephase nicht mehr zwingend gebraucht. Allerdings kann in einer bevorzugten Ausführungsform weiterhin die Decodierung weiterhin hauptsächlich durch den klassischen Decoder 28 erfolgen. Nur wenn diese Decodierung scheitert, wird dann der Klassifikator 30 eingesetzt, um einen Code möglicherweise doch noch zu lesen. Die Klassifikation mit Methoden des maschinellen Lernens wird hier sozusagen nur als Erweiterung, konkret als Retry-Versuch bei Fehllesungen (NoReads) des klassischen Decoders 28 eingesetzt. Das hat den Vorteil, dass die bereits erreichten hohen Leseraten und kurzen Dekodierzeiten des klassischen Decoders 28 nicht gefährdet werden.

Außerdem ist denkbar, den klassischen Decoder 28 noch für Teilaufgaben wie die Erkennung von Start- und Stoppzeichenpositionen des entsprechenden Codetyps zu verwenden. Dazu sollte der klassische Decoder 28 eine entsprechende Ausgabefunktionalität vorsehen. Zwingend erforderlich ist der klassische Decoder 28 dafür nicht, denn der Klassifikator 30 kann Start- und Stoppzeichen auch selbst finden, die wie alle anderen Zeichen Grauwertprofile mit entsprechendem Codeinhalt sind. Die Suche beginnt dann vorzugsweise an beiden Enden und setzt sich zur Mitte hin fort.

Sind Start- und Stoppzeichen gefunden, so wird anhand des konkreten Codetyps und der Abmessungen der Start- und Stoppzeichen in Pixeln die Anzahl der Zeichen geschätzt und dann das Grauwertprofil zwischen Start- und Stoppzeichen äquidistant in die entsprechende Anzahl von Segmenten des Grauwertprofils unterteilt. Die einzelnen Segmente des Grauwertprofils werden analog zu der Lernphase normalisiert. Damit sind die Grauwertprofile entsprechend dem linken Teil der Figur 5 gewonnen, und der Klassifikator 30 ordnet ihnen den im rechten Teil gezeigten Codeinhalt zu.

Im Idealfall gelingt es dem Klassifikator 30, sämtliche Segmente des Grauwertprofils zu decodieren. Dieser Idealfall ist aber nicht immer gegeben, zumal wenn der Klassifikator 30 nur eingesetzt ist, um die seltenen Lesefehler des klassischen Decoders 28 auszugleichen und damit regelmäßig besonders problematische Fälle zu bearbeiten. Außerdem kann ein Klassifikator 30 auch so implementiert sein, dass immer ein Klassifikationsergebnis vorliegt, jedoch nicht unbedingt das objektiv richtige.

Dafür ist es von Vorteil, wenn der Klassifikator 30 zusätzlich zur Klassifizierung auch ein Verlässlichkeitsmaß (Score, Confidence-Level) liefert. Damit lässt sich einerseits bewerten, ob das Leseergebnis aus einem einzelnen Grauwertprofil ausreichend zuverlässig ist (kein Misread).

Wie in Figur 2 illustriert, gibt es im Falle von Barcodes nicht nur eine mögliche Leselinie 34. Diese Redundanz kann genutzt werden, um Lesefehler weiter zu reduzieren. Dazu wird die Decodierung mehrfach mit dem Grauwertprofil jeweils einer Leselinie 34 durchgeführt. Daraus ergeben sich dann für jedes Codeelement eine Vielzahl zugehöriger Segmente der mehreren Grauwertprofile.

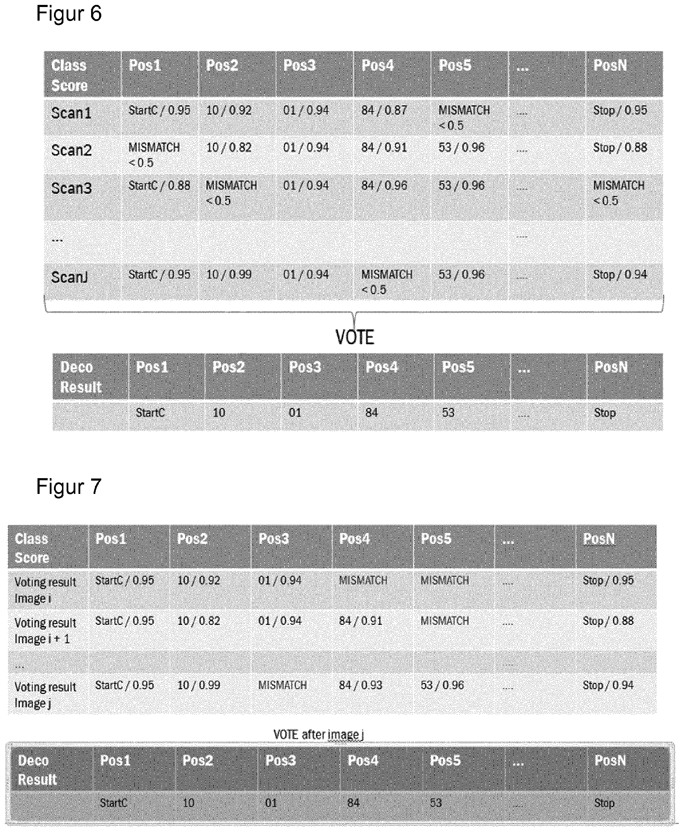

Diese Decodierergebnisse sind beispielhaft tabellarisch in Figur 6 gezeigt. Diese Tabelle wird auch Votingmatrix genannt. Darin bezeichnet Pos1...PosN die verschiedenen Codeelemente. In den Zeilen sind mit Scan1...ScanJ die verschiedenen wiederholten Leseversuche längs jeweils einer anderen Leselinie 34 eingetragen. Die einzelnen Werte der Tabelle haben das Format Codeinhalt/Verlässlichkeitsmaß. So wurde beispielsweise im Scan1 an Pos3 der Wert 01 mit einer Verlässlichkeit von 0.94 decodiert.

Pro Spalte wird nun eine Mehrheitsentscheidung getroffen (Voting). Eine Gewichtung mit dem Verlässlichkeitsmaß ist denkbar. Das Ergebnis, den gemeinsam bestimmten Codeinhalt, zeigt Figur 6 in der untersten Zeile.

In diesem Beispiel wird bereits eine Verlässlichkeit <0.5 als unsicher angesehen, d.h. als fehlerhafte Zuordnung beziehungsweise nicht sicher klassifizierbar. Es ist auch möglich, dass eine Spalte überhaupt nur unsichere Zuordnungen aufweist. An solchen Spaltenpositionen konnte der Klassifikator 30 den Code letztlich auch mit mehreren Leselinien 34 nicht lesen, zumindest nicht mit der geforderten Verlässlichkeit.

Nach einem noch weiter verschärften Kriterium soll sogar mehr als i-mal sicher klassifiziert werden. Wenn also in einer Spalte nur i-mal eine Verlässlichkeit ≥0.5 eingetragen ist, so wird das Gesamtergebnis als nicht valide angesehen. Über das i (Multiread oder Codesicherheit) und die Schwelle 0.5 kann das Verhältnis zwischen den Fehlern eingestellt werden (NoRead, Misread).

Das Zusammensetzen von Leseergebnissen über mehrere Leselinien 34 hilft dann nicht mehr, wenn sich ein Bildfehler über die gesamte Höhe des Barcodes erstreckt. Auch dann kann der Code möglicherweise noch bildübergreifend gelesen werden. Figur 7 zeigt tabellarisch ein Beispiel. Die Tabelle entspricht der Figur 6, mit dem Unterschied, dass die Zeilen nun nicht mehr unterschiedlichen Leselinien 34 innerhalb desselben Bildes, sondern jeweils einer Leselinie 34 in einem anderen Bild desselben Codes entsprechen. Beides ist auch kombinierbar, indem mehrere Leselinien 34 in mehreren Bildern ausgewertet werden.

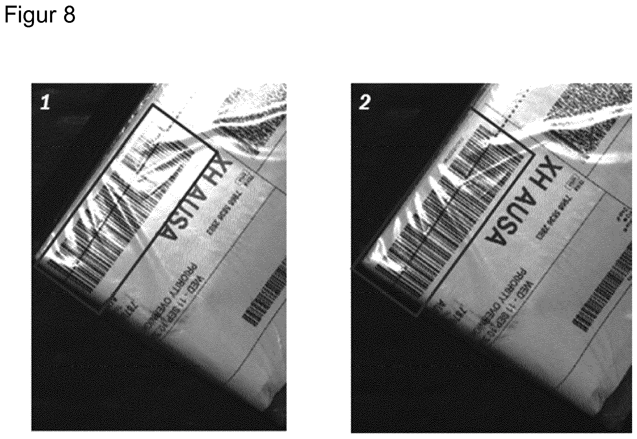

Zur Veranschaulichung sind in Figur 8 zwei Bilder desselben Codes in unterschiedlichen Aufnahmesituationen gezeigt, insbesondere zwei aufeinanderfolgenden Förderpositionen, die nahe genug beieinander liegen, so dass derselbe Code beide Male erfasst ist. Aufgrund von Reflexionen sind jeweils Codebereiche nicht erkennbar. Die davon betroffenen Bildbereiche unterscheiden sich aber.

Mit Hilfe eines Tracking-Algorithmus kann der Bewegungsvektor von Bild zu Bild bestimmt werden. Dadurch lassen sich quasi die Grauwertprofile auch über Bilder hinweg in der richtigen Weise übereinander legen und so für eine Mehrfachlesung nutzen. Sofern die Lücken beziehungsweise nicht ausreichend zuverlässig decodierten Codezeichen durch einen wandernden Defekt verursacht sind, wie häufig beim Erfassen von Codes unter einer reflektierenden Folie, wird der Code nach einer gewissen Anzahl von Frames möglicherweise doch noch gelesen. Im Beispiel der Figur 7 enthält der gemeinsame Code nach dem Voting-Verfahren keine Lücken mehr, obwohl sämtliche beitragenden Einzellesungen unvollständig waren. So wird ein Lesefehler (NoRead) sämtlicher Einzelbilder doch noch ausgeglichen.

Die Erfindung ist am Beispiel von Barcodes beschrieben. Dabei sind manchmal konkrete Codetypen gezeigt, aber die Erfindung ist auf keinen bestimmten Codetyp beschränkt. Sollen 2D-Codes gelesen werden, so gibt es einige Unterschiede, etwa dass ein zeilenförmiges Grauwertprofil nicht mehr den gesamten Code repräsentiert. Stattdessen müssen die Grauwertinformationen zu den einzelnen Codezeichen anders segmentiert werden, entsprechend dem Standard des zu lesenden 2D-Codes. Es ergeben sich aber dennoch Grauwertmuster, die einem Codezeichen entsprechen. Damit ist die Erfindung ohne Weiteres auch auf 2D-Codes anwendbar, insbesondere Stacked Codetypen wie PDF417, wo der Klassifikator 30 die PDF417-Codewörter der entsprechenden drei Cluster klassifiziert.

## Patentansprüche

1. Verfahren zum Lesen von optischen Codes, insbesondere Barcodes, aus Bilddaten, wobei mit einem Klassifikator (30), der für maschinelles Lernen ausgebildet ist, Codebereichen (20) der Bilddaten eine Codeinformation zugeordnet wird, wobei Codes mittels eines klassischen Decoders (28), der mit Verfahren ohne maschinelles Lernen arbeitet, gelesen werden,
**dadurch gekennzeichnet,**
**dass** der Klassifikator (30) mittels überwachtem Lernen anhand dieser gelesenen Codes trainiert wird, wobei der klassische Decoder (28) als Trainer des Klassifikators (30) eingesetzt wird.

2. Verfahren nach Anspruch 1,
wobei der klassische Decoder (28) Schwarz-Weiß-Bildinformationen verarbeitet.

3. Verfahren nach Anspruch 1 oder 2,
wobei der klassische Decoder (28) die Bilddaten binarisiert und/oder Kantenpositionen in den Bilddaten bestimmt.

4. Verfahren nach einem der vorhergehenden Ansprüche,
wobei der Klassifikator (30) Codebereichen eine Codeinformation aufgrund von Grauwertinformationen der Bilddaten zuordnet.

5. Verfahren nach einem der vorhergehenden Ansprüche,
wobei der Klassifikator (30) ein neuronales Netz oder eine Support Vector Machine aufweist.

6. Verfahren nach einem der vorhergehenden Ansprüche,
wobei der Klassifikator (30) auch ein Verlässlichkeitsmaß der jeweiligen Zuordnung eines Codebereichs (20) zu einer Codeinformation bestimmt.

7. Verfahren nach einem der vorhergehenden Ansprüche,
wobei Codebereiche (20) in einzelne Codeelemente unterteilt werden, wobei der Klassifikator (30) jeweils in einem Schritt nur ein Codeelement decodiert.

8. Verfahren nach Anspruch 7,
wobei ein Startzeichen und/oder ein Stoppzeichen mittels eines Verfahrens des klassischen Decoders (28) und/oder des Klassifikators (30) aufgefunden und der dazwischen liegende Codebereich (20) in die einzelnen Codeelemente unterteilt wird.

9. Verfahren nach einem der vorhergehenden Ansprüche,
wobei der klassische Decoder (28) und der Klassifikator (30) in einer Auswertungseinheit (26) implementiert sind.

10. Verfahren nach Anspruch 9,
wobei ein Code durch Zuordnung von Bilddaten eines Codebereichs (20) zu einer Codeinformation mit dem klassischen Decoder (28) und dem Klassifikator (30) gelesen wird.

11. Verfahren nach Anspruch 9 oder 10,
wobei der Klassifikator (30) nur zum Lesen von Codes genutzt wird, die mit dem klassischen Decoder (28) nicht gelesen werden konnten.

12. Verfahren nach einem der vorhergehenden Ansprüche,
wobei die Zuordnung von Codebereichen (20) zu Codeinformationen für verschiedene Linien (34) durch die Bilddaten wiederholt wird und anschließend Teilergebnisse zu einem gemeinsamen Codeinhalt zusammengesetzt werden, insbesondere in einem Voting-Verfahren.

13. Verfahren nach einem der vorhergehenden Ansprüche,
wobei für ein bildübergreifendes Codelesen Codebereiche (20) zwischen zu verschiedenen Zeitpunkten erzeugten Bilddaten verfolgt werden, für die somit mehrfach aufgenommenen Codebereiche (20) jeweils Codeelementen eine Codeinformation zugeordnet und anschließend die Codeinformationen zu dem Codeinhalt zusammengesetzt werden.

14. Verfahren nach einem der vorhergehenden Ansprüche,
wobei der klassische Decoder (28) Codes auf Basis von binarisierten Bilddaten oder einer Kantendetektion in den Bilddaten liest, und wobei der Klassifikator (30) Codebereichen (20) eine Codeinformation aufgrund von Grauwertinformationen der Bilddaten zuordnet.

## Claims

1. A method for reading optical codes from image data, in particular bar codes,
wherein code information is assigned to code regions (20) of the image data by means of a classifier (30) configured for machine learning, wherein codes are read by a classic decoder (28) not making use of machine learning, **characterized in that** the classifier (30) is trained by supervised learning based on these codes, wherein the classic decoder (28) is used as a trainer of the classifier (30).

2. The method according to claim 1,
wherein the classic decoder (28) processes black and white image information.

3. The method according to claim 1 or 2,
wherein the classic decoder (28) binarizes the image data and/or determines edge positions in the image data.

4. The method according to any of the preceding claims,
wherein the classifier (30) assigns code information to code regions (20) based on gray level information of the image data.

5. The method according to any of the preceding claims,
wherein the classifier (30) comprises a neural network or a support vector machine.

6. The method according to any of the preceding claims,
wherein the classifier (30) also determines a measure of reliability for the respective assignment of code information to a code region (20).

7. The method according to any of the preceding claims,
wherein code regions (20) are divided into individual code elements, and wherein the classifier (30) only decodes one code element per step.

8. The method according to claim 7,
wherein a start character and/or a stop character is located by means of the classic decoder (28) and/or the classifier (30), and the code region (20) in between is divided into the individual code elements.

9. The method according to any of the preceding claims,
wherein the classic decoder (28) and the classifier (30) are implemented in an evaluation unit (26).

10. The method according to claim 9,
wherein a code is read by assigning code information to image data of a code region (20) with the classic decoder (28) and the classifier (30).

11. The method according to claim 9 or 10,
wherein the classifier (30) is used only to read codes which could not be read by the classic decoder (28).

12. The method according to any of the preceding claims,
wherein the assignment of code information to code regions (20) is repeated for different lines (34) through the image data and subsequently partial results are combined into a common code content, in particular in a voting method.

13. The method according to any of the preceding claims,
wherein, for code reading across images, code regions (20) are tracked between image data generated at different points in time, code information is assigned to respective code elements in the code regions (20) thus multiply recorded, and the code information subsequently is combine into the code content.

14. The method according to any of the preceding claims,
wherein the classic decoder (28) reads codes based on binarized image data or an edge detection in the image data, and wherein the classifier (30) assigns code information to code regions (20) based on gray level information of the image data.

## Revendications

1. Procédé de lecture de codes optiques, en particulier de codes à barres, à partir de données d'image, dans lequel une information de code est attribuée à des zones de code (20) des données d'image au moyen d'un classificateur (30) qui est réalisé pour un apprentissage automatique, des codes sont lus au moyen d'un décodeur (28) classique qui utilise des méthodes sans apprentissage automatique,
**caractérisé en ce que**
le classificateur (30) est entraîné au moyen d'un apprentissage surveillé en se basant sur ces codes lus, le décodeur (28) classique étant utilisé en tant qu'entraîneur du classificateur (30).

2. Procédé selon la revendication 1,
dans lequel le décodeur (28) classique traite des informations d'image noir et blanc.

3. Procédé selon la revendication 1 ou 2,
dans lequel le décodeur (28) classique convertit en binaire les données d'image et/ou détermine les positions de bord dans les données d'image.

4. Procédé selon l'une des revendications précédentes,
dans lequel le classificateur (30) attribue une information de code à des zones de code en se basant sur des informations de valeur de gris des données d'image.

5. Procédé selon l'une des revendications précédentes,
dans lequel le classificateur (30) comprend un réseau neuronal ou une machine à vecteurs de support.

6. Procédé selon l'une des revendications précédentes,
dans lequel le classificateur (30) détermine également un taux de fiabilité de l'attribution respective d'une zone de code (20) à une information de code.

7. Procédé selon l'une des revendications précédentes,
dans lequel des zones de code (20) sont subdivisées en éléments de code individuels, le classificateur (30) décodant un seul élément de code dans une étape respective.

8. Procédé selon la revendication 7,
dans lequel un caractère de début et/ou un caractère de fin est trouvé à l'aide d'une méthode du décodeur (28) classique et/ou du classificateur (30), et la zone de code (20) intermédiaire est subdivisé en éléments de code individuels.

9. Procédé selon l'une des revendications précédentes,
dans lequel le décodeur (28) classique et le classificateur (30) sont implémentés dans une unité d'évaluation (26).

10. Procédé selon la revendication 9,
dans lequel un code est lu par attribution de données d'image d'une zone de code (20) à une information de code, au moyen du décodeur (28) classique et du classificateur (30).

11. Procédé selon la revendication 9 ou 10,
dans lequel le classificateur (30) n'est utilisé que pour lire des codes qui n'ont pas pu être lus au moyen du décodeur (28) classique.

12. Procédé selon l'une des revendications précédentes,
dans lequel l'attribution de zones de code (20) à des informations de code est répétée pour différentes lignes (34) à travers les données d'image et ensuite des résultats partiels sont composés pour donner un contenu de code commun, en particulier dans un procédé de vote.

13. Procédé selon l'une des revendications précédentes,
dans lequel pour une lecture de codes inter-image, des zones de code (20) sont suivies entre des données d'image générées à différents instants, pour les zones de code (20) ainsi enregistrées plusieurs fois, une information de code est attribuée aux éléments de code respectifs, et ensuite les informations de code sont composées pour donner le contenu de code.

14. Procédé selon l'une des revendications précédentes,
dans lequel le décodeur (28) classique lit des codes en se basant sur des données d'image converties en binaire ou sur une détection de bords dans les données d'image, et le classificateur (30) attribue une information de code à des zones de code (20) en se basant sur des informations de valeur de gris des données d'image.
